# EUROPÄISCHE PATENTSCHRIFT

(11) **EP 2 483 572 B1**
(45) Veröffentlichungstag und Bekanntmachung des Hinweises auf die Patenterteilung: **13.11.2013**
(21) Anmeldenummer: 10779676.5
(22) Anmeldetag: 29.09.2010
(51) Int. Cl.: F16D 3/2237, F16D 3/223

(54) **VERSCHIEBEGELENK**
SLIDING JOINT
JOINT COULISSANT

(30) Priorität: 30.09.2009 DE 102009043578
(43) Veröffentlichungstag der Anmeldung: 08.08.2012
(73) Patentinhaber: Neumayer Tekfor Holding GmbH, 77756 Hausach (DE); hofer-PDC GmbH, 70327 Stuttgart (DE)
(72) Erfinder: LUTZ, Matthias, 72070 Tübingen (DE)
(86) Internationale Anmeldenummer: PCT/DE2010/001147
(87) Internationale Veröffentlichungsnummer: WO 2011/038719

(56) Entgegenhaltungen:
- DE-A1- 10 237 169
- DE-A1-102005 042 909
- DE-U1- 20 023 744
- JP-A- 2007 120 546
- US-A- 3 475 924

## Beschreibung

Die Erfindung bezieht sich auf ein Verschiebegelenk für Kraftfahrzeuge, mit einer Innennabe, welche eine Innennabenachse, erste Innenlaufrillen und zweite Innenlaufrillen aufweist, mit einer Außennabe, welche eine Außennabenachse, erste Außenlaufrillen und zweite Außenlaufrillen aufweist, wobei jeweils eine erste Innenlaufrille und eine erste Außenlaufrille einander gegenüberliegen und jeweils ein erstes Laufrillenpaar bilden, wobei jeweils eine zweite Innenlaufrille und eine zweite Außenlaufrille einander gegenüberliegen und jeweils ein zweites Laufrillenpaar bilden, mit einem Käfig, welcher im Wesentlichen ringförmig ausgestaltet ist und entsprechend der Anzahl der Laufrillenpaare Fenster aufweist, wobei der Käfig zwischen der Innennabe und der Außennabe angeordnet ist, und mit Kugeln, welche in den Fenstern des Käfigs geführt sind und in die Innenlaufrillen und Außenlaufrillen eingreifen.

Im Stand der Technik sind Gegenbahngelenke in verschiedenen Ausführungsformen bekannt, z.B. beschrieben in den Offenlegungsschriften DE 20023744 U1, DE 102005042909 A1 oder DE 10 209 933 A1. Diese Gelenke sind als sogenannte Festgelenke ausgeführt. Dies bedeutet, dass - bis auf kleine Axialspiele - kein axialer Verschiebeweg vorgesehen ist, sondern vielmehr eine feste axiale Lage des Gelenkbeugepunktes gegeben ist. Einige der bekannten Bauformen besitzen den Vorteil, dass sie bezüglich ihrer Kugellaufbahnen vollständig umformtechnisch und somit preisgünstig hergestellt werden können. Weiterhin sind im Stand der Technik verschiedene Ausführungen von axial verschiebbaren, sogenannten Verschiebegelenke bekannt - z.B. DE 10 237 169 A1 -, bei denen neben der Beugung ein axialer Längenausgleich möglich ist. Die meisten bekannten Bauformen solcher Verschiebegelenke müssen auf Grund ihrer Bahngeometrie spanend hergestellt werden. Die bekannten Bauformen, die eine umformtechnische Herstellung erlauben, sind lediglich für sehr kleine Winkel geeignet. Sie haben zumeist den Nachteil, dass der Käfig nicht gesteuert wird und somit in ungewollte axiale Positionen (z.B. am Bahnende) wandern kann, was zu den Rundlauf störende Berührungen führt. Die Offenlegungsschrift WO 2008/043334 A2 beschreibt ein homokinetisches Verschiebegelenk mit einer Innen- und einer Außennabe. In den Naben befinden sich Kugellaufbahnen, welche gegenüber einer Längsachse des Gelenks einen schrägen und geneigten Verlauf aufweisen. Dabei weisen der Schrägungswinkel und der Neigungswinkel ein definiertes Verhältnis zueinander auf. In der Offenlegungsschrift JP 2007-040425 A wird ein Gelenk gezeigt, dessen Außennaben teilweise einen Verlauf aufweisen, welcher das axiale Verschieben von Außen- und Innennabe gegeneinander begrenzt.

Der Erfindung liegt die Aufgabe zugrunde, ein Verschiebegelenk vorzuschlagen, welches umformtechnisch und somit preisgünstig herstellbar ist. Weiterhin soll das Gelenk die beispielsweise in PKW-Längswellen oder in der Lenkung notwendigen Beugewinkel ermöglichen.

Die Aufgabe wird erfindungsgemäß dadurch gelöst, dass die ersten Innenlaufrillen und die zweiten Innenlaufrillen in axialer Richtung im Wesentlichen parallel zur Innennabenachse ausgestaltet sind, dass die ersten Innenlaufrillen und die zweiten Innenlaufrillen jeweils mindestens einen Verschiebeabschnitt und einen Funktionsabschnitt aufweisen, dass die ersten Innenlaufrillen und die zweiten Innenlaufrillen jeweils im Verschiebeabschnitt in radialer Richtung einen im Wesentlichen konstanten Abstand zur Innennabenachse aufweisen, dass die ersten Innenlaufrillen jeweils im Funktionsabschnitt sich in radialer Richtung von der Innennabenachse unter einem ersten Innenlaufrillen-Winkel entfernen, dass die zweiten Innenlaufrillen jeweils im Funktionsabschnitt sich in radialer Richtung der Innennabenachse unter einem zweiten Innenlaufrillen-Winkel zuneigen, dass die ersten Außenlaufrillen und die zweiten Außenlaufrillen in axialer Richtung im Wesentlichen parallel zur Außennabenachse ausgestaltet sind, dass die ersten Außenlaufrillen und die zweiten Außenlaufrillen jeweils mindestens einen Verschiebeabschnitt und einen Funktionsabschnitt aufweisen, dass die ersten Außenlaufrillen und die zweiten Außenlaufrillen jeweils im Verschiebeabschnitt in radialer Richtung einen im Wesentlichen konstanten Abstand zur Außennabenachse aufweisen, dass die ersten Außenlaufrillen jeweils im Funktionsabschnitt sich in radialer Richtung von der Außennabenachse unter einem ersten Außenlaufrillen-Winkel entfernen, dass die zweiten Außenlaufrillen jeweils im Funktionsabschnitt sich in radialer Richtung der Außennabenachse unter einem zweiten Außenlaufrillen-Winkel zuneigen. Im erfindungsgemäßen Gelenk sind somit die Innen- und Außenlaufrillen in axialer Richtung gerade ausgestaltet, d.h. sie sind insbesondere im Gegensatz zum Stand der Technik nicht gekrümmt. Weiterhin haben die Innen- und Außenlaufrillen jeweils einen Abschnitt mit konstantem Abstand zur jeweiligen Achse, d.h. sie verlaufen geradlinig parallel zu ihrer jeweiligen Längsachse. Zudem haben die Innen- und Außenlaufrillen einen Funktionsabschnitt, der sich jeweils mit einer gewissen Steigung in radialer Richtung von der jeweiligen Achse entfernt oder sich an diese annähert. Die Richtung, d.h. ob weg von der Innen- bzw. Außennabenachse oder in hin zur Achse, ist dabei bei den zwei Arten von Innen- bzw. Außenlaufrillen unterschiedlich. In diesem Funktionsbereich befinden sich die Kugeln und in diesem Funktionsbereich erlaubt das Gelenk seine bestimmungsgemäße Funktion. Die Laufrillen sind insbesondere abwechselnd entgegenlaufend angeordnet. Der Käfig ist vorzugsweise wahlweise auf der Innennabe oder der Außennabe radial zentriert und axial über einen weiten Bereich frei verschiebbar. Bei einer Beugung der Innennabe gegenüber der Außennabe verbleiben die der Drehmomentübertragung dienenden Kugeln jeweils in einer gemeinsamen, durch den Käfig bestimmten Ebene, die der Winkelhalbierenden der Beugung entspricht. Auf Grund der abwechselnd gegenläufig angeordneten Bahnen ist die Lage der Kugeln und somit die Lage des Käfigs jeweils eindeutig bestimmt. Bei einer Verschiebung der Innennabe gegenüber der Außennabe verbleiben die Kugeln jeweils in einer gemeinsamen, durch den Käfig bestimmten Ebene. Diese Ebene wandert relativ zu ihrer Ursprungslage den halben zurückgelegten Verschiebeweg der Innennabe relativ zur Außennabe. Ein Teil der Kugeln wandert bei einer solchen Verschiebung im Funktionsbereich radial nach außen und ein anderer Teil wandert radial nach innen. Auf Grund der abwechselnd gegenläufig angeordneten Bahnen ist die Lage der Kugeln und somit die Lage des Käfigs jeweils eindeutig bestimmt. Die jeweils parallel zur jeweiligen Längsachse verlaufenden Kugelbahnbereiche der Verschiebeabschnitte erlauben einen stark vergrößerten Montageverschiebeweg, der bei der Montage einer gesteckt ausgeführten Gelenkwelle vorteilhaft ist. Bei einem Aufstecken des Gelenkteils und dem damit verbundenen Verschieben zurück in die Grundposition finden die Kugeln und damit auch der Kugelkäfig selbsttätig ebenfalls in ihre Grundposition. Da diese Abschnitte nur bei der Montage zum Einsatz kommen, genügen dort reduzierte Anforderungen an die Fertigungstoleranzen (ausreichende Rücknahme / sicherer Freigang). Ein Vorteil des erfindungsgemäßen Gelenks liegt in seinem Crash-Verhalten, indem ein Verschieben der Naben gegeneinander möglich ist.

Eine Ausgestaltung sieht vor, dass jeweils der Verschiebeabschnitt und der Funktionsabschnitt der Innenlaufrillen unmittelbar aneinander angrenzend sind. In einer Ausgestaltung gehen die Abschnitte durch verrundete Übergänge ineinander über. Eine Ausgestaltung beinhaltet, dass jeweils der Verschiebeabschnitt und der Funktionsabschnitt der Außenlaufrillen unmittelbar aneinander angrenzend sind.

Eine Ausgestaltung sieht vor, dass die Länge der Funktionsabschnitte der ersten Innenlaufrillen und der zweiten Innenlaufrillen im Wesentlichen gleich sind. Eine Ausgestaltung beinhaltet, dass die Länge der Funktionsabschnitte der ersten Außenlaufrillen und der zweiten Außenlaufrillen im Wesentlichen gleich sind. Eine Ausgestaltung sieht vor, dass jeweils die axiale Anordnung von Verschiebeabschnitt und Funktionsabschnitt der Innenlaufrillen ausgehend von einem Ende der Innenlaufrillen gleich ist. Die Abfolge oder Reihenfolge der Abschnitte der Innenlaufrillen ist also jeweils ausgehend von einem Ende der Innennabe jeweils gleich. Eine Ausgestaltung beinhaltet, dass jeweils die axiale Anordnung von Verschiebeabschnitt und Funktionsabschnitt der Außenlaufrillen ausgehend von einem Ende der Außenlaufrillen gleich ist. Eine Ausgestaltung sieht vor, dass sich an die Funktionsabschnitte der Innenlaufrillen an der vom jeweiligen Verschiebeabschnitt abgewandten Seite jeweils - insbesondere unmittelbar - ein paralleler Abschnitt anschließt, in welchem die Innenlaufrillen in radialer Richtung einen im Wesentlichen konstanten Abstand zur Innennabenachse aufweisen. In diesem dritten Bereich verlaufen die Laufrillen somit auch geradlinig parallel zur Längsachse auf einem, abhängig davon, ob es sich um erste oder zweite Laufrillen handelt, inneren oder äußeren Teilkreis. Eine Ausgestaltung beinhaltet, dass sich an die Funktionsabschnitte der Außenlaufrillen an der vom jeweiligen Verschiebeabschnitt abgewandten Seite jeweils - insbesondere unmittelbar - ein paralleler Abschnitt anschließt, in welchem die Außenlaufrillen in radialer Richtung einen im Wesentlichen konstanten Abstand zur Außennabenachse aufweisen.

Eine Ausgestaltung sieht vor, dass mindestens eine Innenlaufrille und/oder mindestens eine Außenlaufrille mindestens einen Anschlag aufweist, welcher eine Bewegung einer Kugel in dem der Innenlaufrille und/oder der Außenlaufrille zugeordneten Laufrillenpaar axial begrenzt. Eine Ausgestaltung beinhaltet, dass der Anschlag ein axiales Ende der Innenlaufrille und/oder der Außenlaufrille bildet. Eine Ausgestaltung sieht vor, dass die Verschiebeabschnitte jeweils ein axiales Ende der ersten Innenlaufrillen und/oder der zweiten Innenlaufrillen bilden. Eine Ausgestaltung beinhaltet, dass die Verschiebeabschnitte jeweils ein axiales Ende der ersten Außenlaufrillen und/oder der zweiten Außenlaufrillen bilden. Eine Ausgestaltung sieht vor, dass die parallelen Abschnitte jeweils ein axiales Ende der ersten Innenlaufrillen und/oder der zweiten Innenlaufrillen bilden, welches dem axialen Ende gegenüberliegt, welches durch die Verschiebeabschnitte gebildet ist. Eine Ausgestaltung beinhaltet, dass die parallelen Abschnitte jeweils ein axiales Ende der ersten Außenlaufrillen und/oder der zweiten Außenlaufrillen bilden, welches dem axialen Ende gegenüberliegt, welches durch die Verschiebeabschnitte gebildet ist.

Eine Ausgestaltung sieht vor, dass der erste Innenlaufrillen-Winkel und der zweite Innenlaufrillen-Winkel im Wesentlichen betragsgleich sind. Eine Ausgestaltung beinhaltet, dass der erste Außenlaufrillen-Winkel und der zweite Außenlaufrillen-Winkel im Wesentlichen betragsgleich sind. Eine Ausgestaltung besteht darin, dass die Innenlaufrillen-Winkel und die Längen der Funktionsabschnitte der Innenlaufrillen voneinander abhängen. Die Winkel und die Längen der jeweiligen Funktionsabschnitte sind somit abhängig voneinander ausgestaltet. Dabei lässt sich die Art der Abhängigkeit entsprechend vorgeben. Die einzelnen Innenlaufrillen sind diesbezüglich entweder alle gleich oder unterschiedlich zueinander ausgestaltet. Eine Ausgestaltung sieht vor, dass die Innenlaufrillen-Winkel und die Längen der Funktionsabschnitte der Innenlaufrillen im Wesentlichen antiproportional miteinander verbunden sind. In dieser Ausgestaltung gehen somit ein größerer Innenlaufrillen-Winkel mit einer geringeren Länge des Funktionsabschnitts und umgekehrt einher. Eine Ausgestaltung besteht darin, dass die Außenlaufrillen-Winkel und die Längen der Funktionsabschnitte der Außenlaufrillen voneinander abhängen. In dieser Ausgestaltung stehen somit auch der Winkel und die Länge der Funktionsabschnitte der Außenlaufrillen in einer vorgebbaren Abhängigkeit voneinander. Eine Ausgestaltung beinhaltet, dass die Außenlaufrillen-Winkel und die Längen der Funktionsabschnitte der Außenlaufrillen im Wesentlichen antiproportional miteinander verbunden sind. In dieser Ausgestaltung sind somit auch die Außenlaufrillen-Winkel und die Längen der Funktionsabschnitte gegenläufig miteinander verbunden. Eine Ausgestaltung sieht vor, dass der erste Innenlaufrillen-Winkel und der erste Außenlaufrillen-Winkel im Wesentlichen den gleichen Betrag aufweisen. Eine Ausgestaltung beinhaltet, dass der zweite Innenlaufrillen-Winkel und der zweite Außenlaufrillen-Winkel im Wesentlichen den gleichen Betrag aufweisen. Eine Ausgestaltung sieht vor, dass für die Laufrillenpaare jeweils die Länge des Funktionsabschnitts der ersten Innenlaufrille und die Länge des Funktionsabschnitts der zugeordneten ersten Außenlaufrille im Wesentlichen gleich sind. Eine Ausgestaltung beinhaltet, dass für die Laufrillenpaare jeweils die Länge des Funktionsabschnitts der zweiten Innenlaufrille und die Länge des Funktionsabschnitts der zugeordneten zweiten Außenlaufrillen im Wesentlichen gleich sind.

Eine Ausgestaltung sieht vor, dass die Fenster des Käfigs, die Kugeln, die Innenlaufbahnen und die Außenlaufbahnen derartig ausgestaltet und aufeinander abgestimmt sind, dass der Käfig die Kugeln auch in dem Zustand führt, in welchem die Kugeln sich in dem Bereich des größten radialen Abstands der Funktionsabschnitte der Innenlaufbahnen und der Außenlaufbahnen befinden. Für die Dimensionierung des erfindungsgemäßen Verschiebegelenks sind im Betrieb die zulässigen Beugewinkel sind so zu wählen, dass die Kugeln durch ihre radiale Bewegung den durch den Käfig axial begrenzten Bereich nicht verlassen. Gleichzeitig sind die zulässigen Verschiebewege so zu wählen, dass die Kugeln den unter einem Winkel zur Längsachse geneigten Laufrillenpaarbereich nicht verlassen. Überdies sollten bei kombinierter Beuge- und Verschiebebewegung beide Kriterien eingehalten werden. Eine Ausgestaltung besteht darin, dass die Fenster des Käfigs, die Kugeln, die Innenlaufbahnen und die Außenlaufbahnen derartig ausgestaltet und aufeinander abgestimmt sind, dass der Käfig die Kugeln auch in dem Zustand führt, in welchem die Kugeln sich in dem Bereich des kleinsten radialen Abstands der Funktionsabschnitte der Innenlaufbahnen und der Außenlaufbahnen befinden. Der Käfig ist somit derartig ausgestaltet, dass er beispielsweise auch den Kräften standhält, die durch die Naben auf die Kugeln wirken. Eine Ausgestaltung beinhaltet, dass der Abstand zwischen einer Außenfläche und einer Innenfläche des Käfigs im Bereich der Fenster derartig ausgestaltet ist, dass der Käfig die Kugeln in dem Zustand des größten und/oder des kleinsten radialen Abstands führt.

Eine Ausgestaltung sieht vor, dass mindestens ein Gehäuse vorgesehen ist, welches die Außennabe und die Innennabe zumindest abschnittsweise umgibt. Eine Ausgestaltung ist derart, dass das Gehäuse und die Außennabe drehfest miteinander gekoppelt sind. Eine Ausgestaltung beinhaltet, dass sich zwischen der Innennabe und/oder der Außennabe und dem Gehäuse ein Dichtelement befindet. Eine Ausgestaltung sieht vor, dass das Dichtelement an einem Endbereich zwischen der Außennabe und dem Gehäuse befestigt ist, und dass das Dichtelement an einem anderen Endbereich zumindest mittelbar an der Innennabe befestigt ist. Eine Ausgestaltung beinhaltet, dass das Dichtelement an der Innennabe mit einem Ring befestigt ist, wobei der Ring innerhalb des vom Dichtelement und vom Gehäuse umschlossenen Innenraums angeordnet ist.

Eine Ausgestaltung sieht vor, dass mindestens eine erste Innenlaufrille und mindestens eine zweite Innenlaufrille miteinander abwechselnd um die Innennabenachse angeordnet sind. In einer Ausgestaltung wechseln sich jeweils eine erste und eine zweite Innenlaufrille um die Innennabenachse herum ab. In einer weiteren Ausgestaltung sind jeweils zwei erste und zwei zweite Innenlaufrillen nebeneinander angeordnet. Es können auch unterschiedliche Anzahlen von Innenlaufrillen alternierend auf der Innennabe angebracht sein. Eine Ausgestaltung beinhaltet, dass mindestens eine erste Außenlaufrille und mindestens eine zweite Außenlaufrille miteinander abwechselnd um die Außennabenachse angeordnet sind. Die unterschiedlichen Außenlaufrillen sind somit ebenfalls in gleichen oder unterschiedlichen Anzahlen abwechselnd in der Außennabe angebracht.

Eine Ausgestaltung sieht vor, dass zumindest die Außennabe teilweise aus einem Metall und teilweise aus einem Kunststoff besteht. Vorzugsweise bestehen zumindest die Abschnitte der Außennabe, welche die Funktionsabschnitte tragen, aus einem Metall, z.B. aus Stahl. Das Metall kann teilweise auch gehärtet sein. Weiterhin besteht vorzugsweise wenigstens ein Bereich der Außennabe, welcher die Verschiebeabschnitte oder die parallelen Abschnitte trägt, teilweise oder vollständig aus einem Kunststoff. In einer Ausgestaltung ist die Außennabe im Wesentlichen zumindest dreiteilig aufgebaut, bestehend aus einem Anteil aus Kunststoff für die Verschiebeabschnitte, einem angrenzenden Anteil aus einem Metall für die Funktionsabschnitte und schließlich einem Anteil aus einem Kunststoff mit den parallelen Abschnitten. Die Komponenten werden beispielsweise teilweise ineinander eingebracht, werden miteinander verklebt oder verspannt. In einer weiteren Ausgestaltung besteht die Innennabe teilweise aus einem Metall und teilweise aus einem Kunststoff.

Das erfindungsgemäße Gelenk lässt sich somit wie folgt beschreiben: Das Gelenk kann sowohl unter Beugung als auch unter axialer Verschiebung Drehmoment übertragen. Durch die Wahl der Konstruktionsparameter kann entsprechend der Anwendung ein Gelenk mit großem Beugewinkel bzw. großem Verschiebeweg realisiert werden. Der Winkel und der Verschiebeweg sind dabei in einer Ausgestaltung insbesondere antiproportional miteinander verbunden. Die Verschiebeabschnitte lassen sich auch beschreiben als Bereiche mit geraden Bahnen, d.h. parallel zur Gelenk-Hauptachse, und die Funktionsabschnitte als Bereiche mit konischem Bahnverlauf, d.h. geneigt in eine Richtung gegenüber der Gelenk-Hauptachse. Dabei ist die Gelenk-Hauptachse die Achse, wenn die Innennaben- und die Außennabenachse im Fall des ungebeugten Gelenks zusammenfallen. Im Gelenkinnenteil bzw. in der Innennabe sind dabei die Verschiebeabschnitte an dem dem Gelenkinnenteilschaft zugewandten Ende der Laufrillenpaare und in der Außennabe an dem vom Gelenkinnenteilschaft abgewandten Ende der Laufrillenpaare angeordnet, d.h. sie liegen sich axial einander gegenüber. Die Verschiebeabschnitte sind im Wesentlichen als Montagebereiche anzusehen. Sie erlauben das Zusammenschieben des Gelenks auf eine gegenüber der Funktionsbaulänge stark reduzierte Länge zu Montagezwecken. Das weite Zusammenschieben erleichtert die Montage einer Gelenkwelle insbesondere bei Zapfenanbindung. Dabei kann die Welle ausreichend verkürzt werden, um sie zwischen den Zapfen einzufädeln. Anschließend kann sie wieder auseinandergezogen werden, um sie auf den (die) Zapfen aufzustecken. In einer Variante sind die Laufrillenpaare zu beiden Seiten der Funktionsabschnitte als Bahnen mit geradem Bahnverlauf weitergeführt, d.h. es finden sich Verschiebeabschnitte und parallele Abschnitte. Angrenzend an die Verschiebe- bzw. parallelen Abschnitte können noch Anschläge als Bestandteile der Laufrillenpaare zum Begrenzen des Weges der Kugeln vorgesehen sein. Die Laufrillenpaare sind somit insgesamt in zwei Gruppen unterteilt: Im einen Fall ist die Neigung der Rillen im Funktionsabschnitt in der Innennabe derart, dass die Rille an dem Ende, das dem Gelenkinnenteilschaft zugewandt ist, auf einem kleinem Teilkreis endet und an dem Ende, das vom Gelelenkinnenteilschaft abgewandt ist, auf einem großen Teilkreis endet. Die Neigung der Rille im Funktionsabschnitt in der Außennabe ist derart, dass die Rille an dem Ende, das dem Gelenkinnenteilschaft zugewandt ist, auf einem großen Teilkreis endet und an dem Ende, das vom Gelelenkinnenteilschaft abgewandt ist, auf einem kleinen Teilkreis endet. Im anderen Fall ist die Neigung der Rille im Funktionsabschnitt in der Innennabe derart, dass die Rille an dem Ende, das dem Gelenkinnenteilschaft zugewandt ist, auf einem großen Teilkreis endet und an dem Ende, das vom Gelelenkinnenteilschaft abgewandt ist, auf einem kleinen Teilkreis endet. Die Neigung der Rille im Funktionsabschnitt in der Außennabe ist derart, dass die Rille an dem Ende, das dem Gelenkinnenteilschaft zugewandt ist, auf einem kleinen Teilkreis endet und an dem Ende, das dem Gelelenkinnenteilschaft abgewandt ist, auf einem großen Teilkreis endet. Die Rillen einer Gruppe sind jeweils hinterschnittfrei (sowohl in der Außennabe, als auch in der Innenabe) und somit besonders gut umformtechnisch fertigbar. Die Bereiche mit geraden Rillen - also im Verschiebe- oder parallelen Abschnitt - können bezüglich ihrer Fertigungstoleranzen relativ "offen" gewählt werden, da diese Abschnitte in der eigentlichen Anwendung, also im verbauten Zustand, nicht mehr zur Führung der Kugeln dienen. Insbesondere können die Toleranzen in diesen Bereichen so gewählt werden, dass in diesem Bereich sicher ein spielbehafteter Zusammenbau vorliegt, der eine nochmals reduzierte Axialkraft bei der Montage ermöglicht.

Der Käfig ist in einer Ausgestaltung vorzugsweise radial in der Außennabe geführt. In einer anderen Ausgestaltung ist der Käfig insbesondere nicht auf der Innennabe geführt. Weiterhin ist der Käfig vorzugsweise axial frei gegenüber der Außen- und gegenüber der Innennabe. Der Käfig kann in einer Ausgestaltung eine Außenkontur besitzen, die im mittleren Bereich sphärisch ist, womit auch bei Neigung des Käfigs eine axiale Führung erhalten bleibt. Die Außenkontur des Käfigs kann anschließend an den sphärischen Bereich in beiden Richtungen zylindrischen Bereich besitzen. Diese Bereiche können zur Begrenzung der Beugung dienen. Wird das Gelenk so eingesetzt, dass sich die Kugeln im Funktionsabschnitt befinden, so heben sich die auf den Käfig wirkenden Axialkräfte gegenseitig nahezu auf. Die Aufhebung der Kräfte erfolgt nicht vollständig, sondern nur in guter Nährung. Durch die auf die Kugeln wirkenden Kräfte wird der Käfig jeweils auf einen Schwenkwinkel entsprechend dem halben Gelenkbeugungswinkel gesteuert. Der Übergang zwischen den Abschnitten einer Rille kann insbesondere verrundet sein. Die Außennabe kann so in einem Gehäuse aufgenommen sein, dass die axialen Wege der Kugeln in den Laufrillenpaaren der Gelenkaußennabe durch das Gehäuse begrenzt werden. Die Begrenzung kann dabei unter Umständen nur für die Kugeln aus einer Gruppe von Bahnen wirksam werden. Die axiale Begrenzung der Bewegung der anderen Kugeln folgt allerdings zwingend auf Grund der Verbindung der axialen Bewegung der Kugeln über den Kugelkäfig. Diese Variante ist somit eine Alternative oder Ergänzung zu der Ausgestaltung, dass die Rillen zu ihrem Ende hin so ausgebildet sind, dass sie zu einer Begrenzung der axialen Bewegung der Kugeln führen, d.h. dass sie selbst einen Anschlag haben. Die Axialwegbegrenzung kann dabei so ausgeführt sein, dass sie umformtechnisch hergestellt werden kann. Die Axialwegbegrenzung kann gegebenenfalls nur an den Rillen einer Bahngruppe oder nur an einer einzigen Rille vorgenommen werden. Bei Verwendung besonders kleiner Axialwegbegrenzungen bzw. durch Weglassen derselbigen kann ein besonders kraftarm teleskopierbares Gelenk dargestellt werden. Hierdurch kann erreicht werden, dass im Crashfall die Gelenkwelle an dieser Stelle ohne großen Kraft- bzw. Energieaufwand zusammengeschoben werden kann.

Die Erfindung wird anhand einiger in den Figuren dargestellter Ausführungsbeispiele näher erläutert. Dabei zeigen:
Fig. 1: einen Schnitt durch ein erfindungsgemäßes Gelenk,
Fig. 2: einen Schnitt durch ein Gelenk der Fig. 1,
Fign. 3 a) und b): Schnitte durch zwei Ausgestaltungen des erfindungsgemäßen Gelenks,
Fig. 4: einen Schnitt durch eine weitere Ausgestaltung des erfindungsgemäßen Gelenks,
Fig. 5: ein vergrößerter Ausschnitt der Fig. 4, und
Fig. 6: einen Schnitt durch eine zusätzliche Ausgestaltung des erfindungsgemäßen Gelenks.

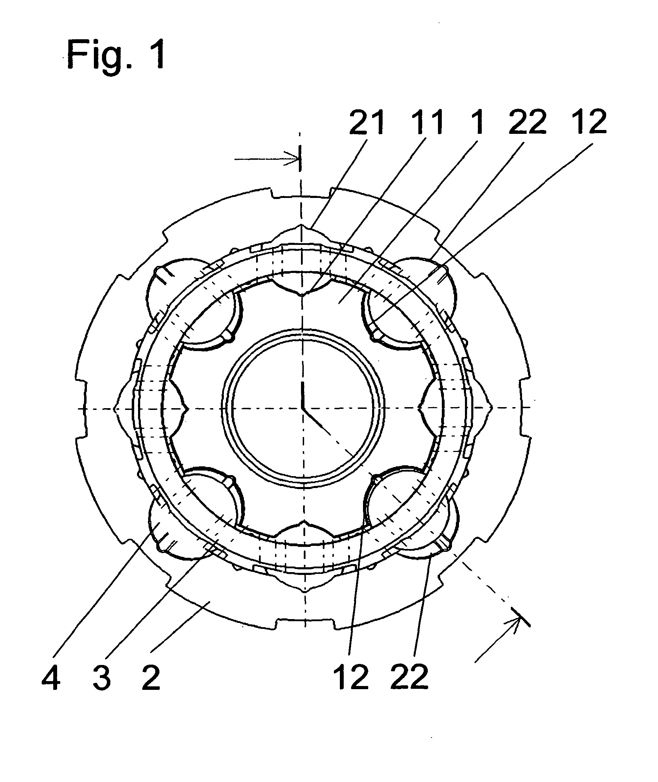

In der Fig. 1 ist ein Schnitt durch ein erfindungsgemäßes Verschiebegelenk dargestellt. Zu sehen ist die Innennabe 1 mit den insgesamt acht Innenlaufrillen, welche aus vier ersten Innenlaufrillen 11 und vier zweiten Innenlaufrillen 12 bestehen und die abwechselnd um die Innennabenachse-also die Längsachse der Innennabe - herum angeordnet sind. Den Innenlaufrillen 11, 12 gegenüber befinden sich die Außenlaufrillen 21, 22, wobei die Innenlaufrillen und die zugeordneten Außenlaufrillen jeweils Laufrillenpaare bilden. Die acht Außenlaufrillen werden gebildet durch vier erste Außenlaufrillen 21 und vier zweite Außenlaufrillen 22, welche alternierend um die Außennabenachse angeordnet sind. Somit sind erste Innenlaufrillen ersten Außenlaufrillen und zweite Innenlaufrillen zweiten Außenlaufrillen zugeordnet. Zu sehen ist hier weiterhin, dass sich in dieser Ausgestaltung jeweils erste Innenlaufrillen 11 auf der Innennabe 1 einander gegenüberliegen. Entsprechendes gilt für die zweiten Innenlaufrillen bzw. für die Außenlaufrillen. Die Innen- und Außenlaufrillen sind alle derartig ausgestaltet, dass sie axial in Richtung der ihnen zugeordneten Nabenachsen gerade, d.h. parallel zu den Nabenachsen verlaufen. In radialer Richtung verengen bzw. erweitern sich jedoch die einzelnen Laufrillenpaare, d.h. ihr Abstand zu den Nabenachsen verändert sich, jedoch in Richtung der Nabenachsen und senkrecht zur Änderung in radialer Richtung bleiben die Laufrillen gerade und weichen nicht z.B. seitlich von der jeweiligen Nabenachse ab. In den Laufrillenpaaren ist jeweils eine Kugel 4 vorgesehen. Die Kugeln 4 befinden sich in den Fenstern eines ringförmigen Käfigs 3, welcher sie in einer Ebene hält. In dieser Variante sind acht Laufrillenpaare vorgesehen. Es können jedoch auch andere, gerade oder ungerade Anzahlen vorgesehen sein, die ggf. ganzzahlige Vielfache von vier sind oder nicht sind. So können sich jeweils auch zwei Laufrillenpaare des gleichen Typs miteinander abwechseln.

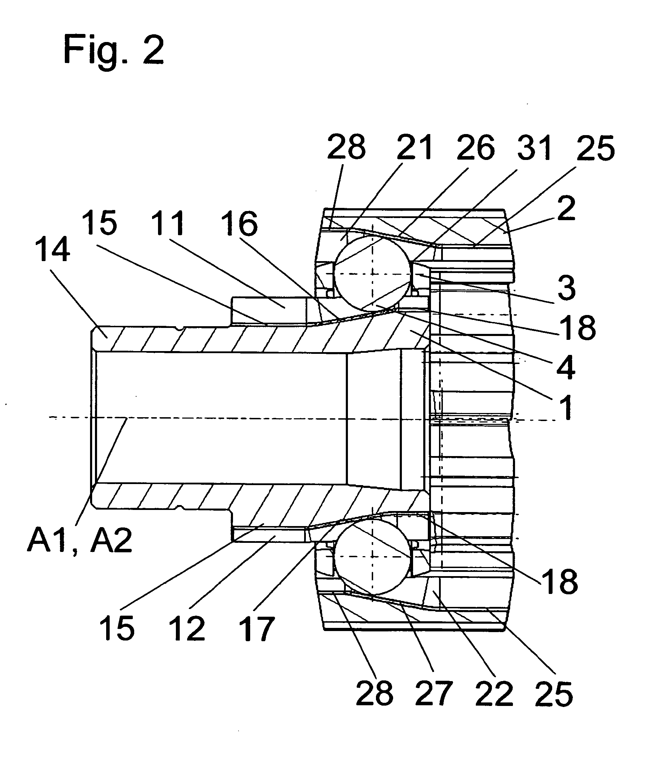

Der Schnitt der Fig. 2 durch das Gelenk der Fig. 1 verläuft - wie in der Fig. 1 angedeutet - durch zwei unterschiedliche Laufrillenpaare. Oben befinden sich eine erste Innenlaufrille 11 und eine erste Außenlaufrille 21 und unten eine zweite Innenlaufrille 12 und eine zweite Außenlaufrille 22. Die erste Innenlaufrille 11 hat an einem ihrer Enden einen Verschiebeabschnitt 15, welcher derartig ausgestaltet ist, dass die Rille in diesem Bereich im Wesentlichen einen konstanten Abstand zur Innennabenachse A1 aufweist, d.h. die Rille 11 verläuft in diesem Verschiebeabschnitt 15 parallel zur Innennabenachse A1. An den Verschiebeabschnitt 15 schließt sich ein Funktionsabschnitt 16 an, in welchem die Beugung des Gelenkes stattfindet. In dem Funktionsabschnitt 16 ist die Innenlaufrille 11 unter einem ersten Innenlaufrillen-Winkel von der Innennabenachse A1 weg geneigt, d.h. die Innenlaufrille 11 entfernt sich in diesem Bereich von der Innennabenachse A1. In dieser Ausgestaltung schließt sich an den Funktionsabschnitt 16 noch ein paralleler Abschnitt 18 an, in welchem die Innenlaufrille 11 wieder parallel zur Innennabenachse A1 und somit in konstantem Abstand dazu verläuft. Durch den Verlauf des Funktionsabschnittes 16 ist dieser Abstand jedoch größer als der des Verschiebeabschnitts 15. Die erste Außenlaufrille 21 der Außennabe 2 verfügt ebenfalles über einen Verschiebeabschnitt 25, in welchem die Außenlaufrille 21 parallel zur Außennabenachse A2 und somit in einem konstanten Abstand dazu geführt wird. Nach dem Verschiebeabschnitt 25 ist in der Außenlaufrille 21 ein Funktionsabschnitt 26 vorgesehen, in welchem sich die Außenlaufrille 21 unter einem ersten Außenlaufrillen-Winkel von der Außennabenachse A2 entfernt. Die erste Innenlaufrille 11 und die erste Außenlaufrille 21 entfernen sich somit - jeweils betrachtet ausgehend vom jeweiligen Verschiebeabschnitt in Richtung des jeweiligen Funktionsabschnitts - beide in den jeweiligen Funktionsabschnitten 16, 26 von ihren Nabenachsen A1, A2. Betrachtet man den Verlauf der Rillen hier ausgehend von der linken Seite, also ausgehend vom Gelenkinnenteilschaft 14, so entfernt sich die erste Innenlaufrille 11 in ihrem Funktionsabschnitt 16 von der Längsachse des Gelenks und die Außenlaufrille 21 nähert sich in ihrem Funktionsabschnitt 26 der Längsachse des Gelenks an. Nach dem Funktionsabschnitt 26 hat die Außenlaufrille 21 wieder einen Verlauf mit einem konstanten Abstand zur Außennabenachse A2 in dem parallelen Abschnitt 28. Der Verschiebeabschnitt 15 der zweiten Innenlaufrille 12 liegt parallel zum Verschiebeabschnitt 15 der ersten Innenlaufrille 12 und beginnt auch axial auf der gleichen Seite. Entsprechendes gilt für den parallelen Abschnitt 18. Der Unterschied zwischen der ersten 11 und der zweiten Innenlaufrille 12 besteht im Bereich der Funktionsabschnitte 16, 17, wobei sich die zweite Innenlaufrille 12 im Funktionsabschnitt 17 der Innennabenachse A1 annähert. Die zweite Außenlaufrille 22 ist derartig ausgestaltet, dass sie in ihrem Funktionsabschnitt 27 sich der Außennabenachse A2 unter einem zweiten Außenlaufrillen-Winkel ausgehend von ihrem Verschiebeabschnitt 25 annähert. Ansonsten ist die zweite Außenlaufrille 22 entsprechend der ersten Außenlaufrille 21 ausgestaltet. Ausgehend vom Gelenkinnenteilschaft 14 nähert sich die zweite Innenlaufrille 12 im Funktionsabschnitt 17 der Innennabenachse A1 an und die zweite Außenlaufrille 22 entfernt sich in ihrem Funktionsabschnitt 27 von der Außennabenachse A2, wobei in der hier gezeigten Ausgestaltung die Innennabenachse A1 und die Außennabeachse A2 und die Längsachse des Gelenks zusammenfallen. Die Laufrillenpaare verfügen somit über jeweils zwei Abschnitte, in welchen mindestens eine Laufrille - Innen- bzw. Außenlaufrille - einen geraden und im Abstand zur jeweiligen Achse konstanten Verlauf aufweist. Über diese Abschnitte lässt sich beispielweise die Montage des Gelenks vornehmen. Damit kann auch einhergehen, dass bei der Fertigung dieser Abschnitte eine geringere Genauigkeit gefordert wird als bei den Funktionsabschnitten. In den Funktionsabschnitten sind die einzelnen Laufrillen jeweils in radialer Richtung geneigt, wodurch sich jeweils ein Abstand bzw. eine Verengung der Laufrillenpaare ergibt. Die Verschiebeabschnitte 15 der Innenlaufrillen 11, 12 befinden sich in dieser Variante in Richtung des Gelenkinnenteilschafts 14 und die Verschiebeabschnitte 25 der Außenlaufrillen 21, 22 befinden sich auf der vom Gelenkinnenteilschaft 14 abgewandten Seite. Diese geraden Abschnitte 15, 25 liegen sich somit axial bezogen auf die Längsachse des Gelenks einander gegenüber. In der hier gezeigten Ausgestaltung des Gelenks und dem hier nicht gekippten Zustand fallen die Innennabenachse A1 und die Außennabenachse A2 zusammen und ergeben somit die Längsachse des Gelenks. Die Übergänge zwischen den einzelnen Bereichen der Bahnen sind dabei vorzugsweise gleichmäßig, z.B. über gerundete Abschnitte.

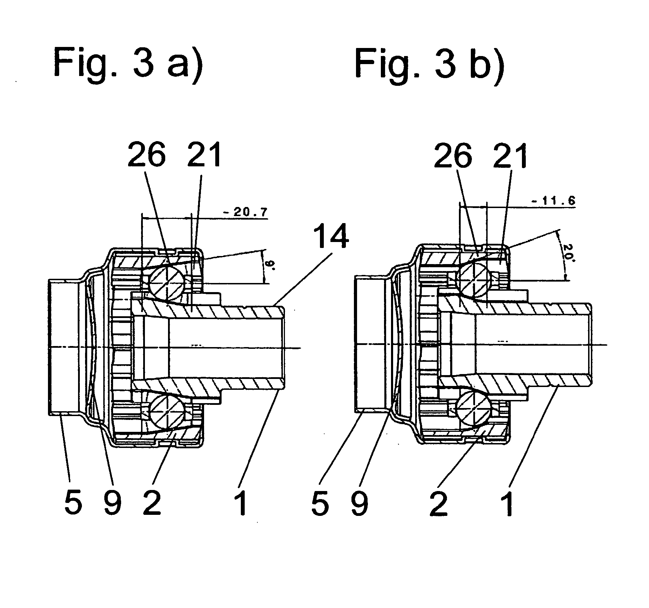

Die Fign. 3 a) und 3b) verdeutlichen den Zusammenhang zwischen den Winkeln der Neigung der Laufrillen relativ zur der jeweiligen Achse im Bereich der Funktionsabschnitte und der Länge der Funktionsabschnitte an zwei Beispielen. Der Außenlaufrillen-Winkel der ersten Außenlaufrille 21 des Gelenks der Fig. 3 a) ist größer als der Außenlaufrillen-Winkel des Gelenks der Fig. 3 b). Umgekehrt ist die Länge des Funktionsabschnitts 26 des Gelenks der Fig. 3 a) größer als die Länge des Funktionsabschnitts 26 des Gelenks der Fig. 3 b). Ein entsprechender Zusammenhang gilt auch für die Funktionsabschnitte der anderen Laufrillen. Zu sehen ist auch, dass die Innennabe 1 und die Außennabe 2 vollständig oder teilweise in einem Gehäuse 5 untergebracht sind. Die Außennabe 2 und das Gehäuse 5 sind dabei drehfest miteinander verbunden. Vor der Innennabe 1 ist gegenüber dem Gelenkinnenteilschaft 14 ein Deckel 9 vorgesehen. Dieser dichtet z.B. in Verbindung mit dem im Folgenden beschriebenen Dichtelement das Gelenk ab. Weiterhin dient der Deckel 9 im Fall eines Crashs als Anschlag für die Innennabe 1, wobei die Kraft, die zum Durchstoßen des Deckels vorgesehen ist, über dessen Dicke und Geometrie einstellbar ist. In einer weiteren - hier nicht dargestellten - Variante ist das Gelenk mit einem Flansch zumindest mittelbar am Gehäuse oder am Gelenkaußenteil, d.h. an der Außennabe zur Befestigung ausgestaltet.

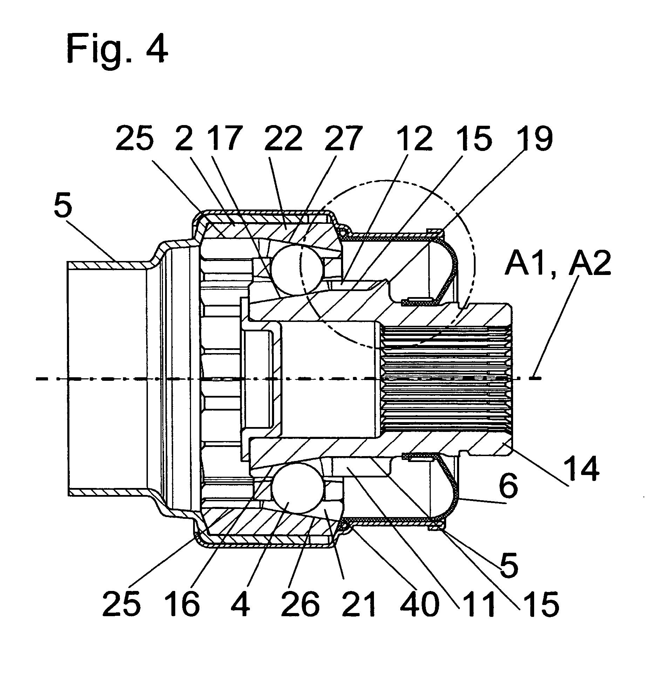

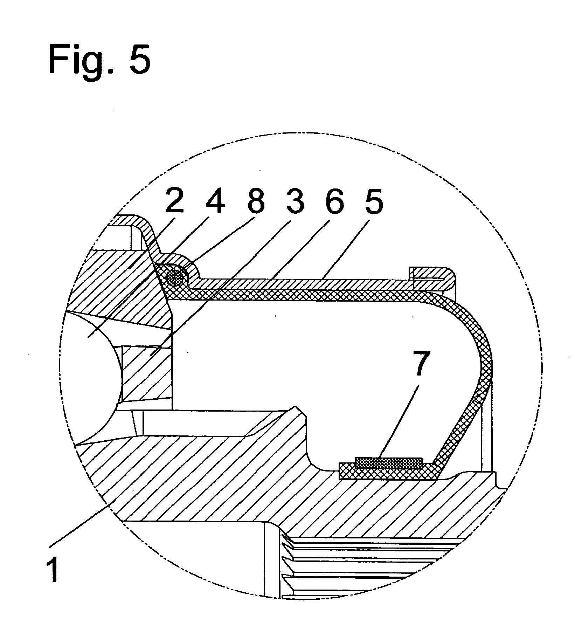

Die Fig. 4 zeigt eine weitere Variante des erfindungsgemäßen Gelenks. In dieser Ausgestaltung befinden sich die erste Innenlaufrille 11 und die erste Außenlaufrille 21 unten und die zweite Innenlaufrille 12 und die zweite Außenlaufrille 22 sind oben dargestellt. Die zweite Innenlaufrille 12 verfügt über einen Verschiebeabschnitt 15, welcher an einem Ende einen Anschlag 19 aufweist. Der Anschlag 19 ragt in das zugeordnete Laufrillenpaar hinein und begrenzt somit die Bahn der Kugel 4 in diesem Laufrillenpaar. Der Weg der Kugel in der zweiten Innenlaufrille 12 wird in dieser Ausgestaltung auch noch beschränkt durch einen Pfropfen 41, welcher in einer stirnseitigen Aussparung der Innennabe 2 angebracht ist und welcher derartig ausgestaltet ist, dass er radial so weit nach außen ragt, dass er den Endanschlag mindestens einer Innenlaufrille 12 für die Kugel 4 bildet. An den Verschiebeabschnitt 15 schließt sich der Funktionsbereich 17 an, welcher in Richtung der Innennabenachse A1 geneigt ist. In dieser Ausgestaltung bilden die Verschiebeabschnitte 15, 25 jeweils ein Ende der zugehörigen Laufrillen 11, 12, 21, 22. Das andere Ende wurde in den Ausgestaltungen der Figuren Fig. 1 bis Fig. 3 durch die parallelen Abschnitte 18, 28 gebildet. Hier enden die Laufrillen 11, 12, 21, 22 in den Funktionsabschnitten 16, 17, 26, 27. Beim - hier unten zu sehenden - Laufrillenpaar aus der ersten Innenlaufrille 11 und der ersten Außenlaufrille 21 wird der Weg der Kugel beispielsweise durch ein Dichtelement 6 begrenzt, welches derartig ausgestaltet und zwischen dem Gehäuse 5 und der Außennabe 2 angeordnet ist, dass es sich am Ende der Außennabe 2 befindet und somit die bis zum Ende reichende Außenlaufrille 21 an der Anschlagskante 40 abschließt. Die Innennabe 1 ist hier mit einer Steckverzahnung am Gelenkinnenteilschaft 14 zur Anbindung an eine Welle vorgesehen. Für die Anbindung an die Welle ist beispielsweise ein Sicherungsring vorgesehen, oder eine Überwurfmutter wird in Verbindung mit einer passenden Außenkontur angewendet. Die Innennabe 1 und die Außennabe 2 sind von einem Gehäuse 5 umgeben. In Richtung der Innennabe 1 ist das Gehäuse mit einem Dichtelement 6 verschlossen. Die Verbindung zwischen Dichtelement 6 und den beiden Naben 1, 2 ist im vergrößerten Ausschnitt der Fig. 5 dargestellt. An einem Ende ist das Dichtelement 6 zwischen dem Gehäuse 5 und der Außennabe 2 befestigt. Am anderen Ende ist das Dichtelement 6 über einen Ring an der Innennabe 1 fixiert, wobei der Ring 7 sich vorteilhafterweise in dem Innenraum befindet, welcher durch das Gehäuse 5 und die beiden Naben 1, 2 erzeugt wird. In dem Dichtelement 6 ist hier noch ein Verstärkungsring 8 vorgesehen, welcher im Übergangsbereich zwischen dem Gehäuse 5 und der Außennabe 2 angeordnet ist.

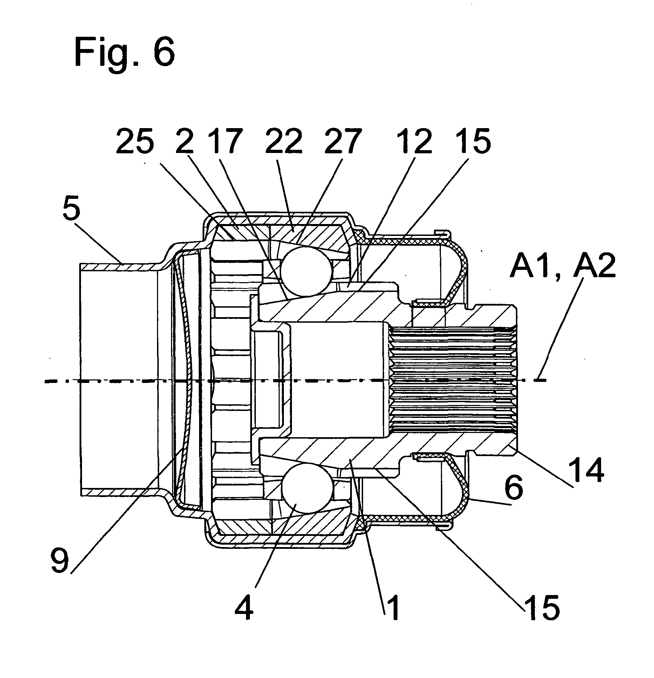

In der Variante des Gelenks der Fig. 6 besteht die Außennabe 2 aus zwei Komponenten (alternativ können auch mehrere Komponenten vorgesehen sein bzw. kann auch die Innennabe 1 mehrteilig aufgebaut sein): Der Anteil, welcher den Funktionsabschnitt 27 trägt, besteht dabei aus einem Metall, z.B. aus Stahl. Der Anteil, in welchem sich die Verschiebeabschnitte 25 befinden, besteht aus einem Kunststoff. Die unter Belastung stehenden Bereiche der Außenlaufrillen 22 sind somit in belastbarem Metall eingebracht und um z.B. Gewicht einzusparen, bestehen die Abschnitte, welche im Wesentlichen nur während der Montage relevant sind, aus einem Kunststoff. Die Außennabe 2 wird dabei von dem Gehäuse 5 derartig umfasst, dass deren Bestandteile zusammengehalten werden.

## Patentansprüche

1. Verschiebegelenk für Kraftfahrzeuge,
mit einer Innennabe (1), welche eine Innennabenachse (A1), erste Innenlaufrillen (11) und zweite Innenlaufrillen (12) aufweist,
mit einer Außennabe (2), welche eine Außennabenachse (A2), erste Außenlaufrillen (21) und zweite Außenlaufrillen (22) aufweist,
wobei jeweils eine erste Innenlaufrille (11) und eine erste Außenlaufrille (21) einander gegenüberliegen und jeweils ein erstes Laufrillenpaar bilden,
wobei jeweils eine zweite Innenlaufrille (12) und eine zweite Außenlaufrille (22) einander gegenüberliegen und jeweils ein zweites Laufrillenpaar bilden,
mit einem Käfig (3), welcher im Wesentlichen ringförmig ausgestaltet ist und entsprechend der Anzahl der Laufrillenpaare Fenster aufweist,
wobei der Käfig (3) zwischen der Innennabe (1) und der Außennabe (2) angeordnet ist, und
mit Kugeln (4), welche in den Fenstern des Käfigs (3) geführt sind und in die Innenlaufrillen (11, 12) und Außenlaufrillen (21, 22) eingreifen,
**dadurch gekennzeichnet,**
**dass** die ersten Innenlaufrillen (11) und die zweiten Innenlaufrillen (12) in axialer Richtung im Wesentlichen parallel zur Innennabenachse (A1) ausgestaltet sind, dass die ersten Innenlaufrillen (11) und die zweiten Innenlaufrillen (12) jeweils mindestens einen Verschiebeabschnitt (15) und einen Funktionsabschnitt (16, 17) aufweisen,
**dass** die ersten Innenlaufrillen (11) und die zweiten Innenlaufrillen (12) jeweils im Verschiebeabschnitt (15) in radialer Richtung einen im Wesentlichen konstanten Abstand zur Innennabenachse (A1) aufweisen,
**dass** die ersten Innenlaufrillen (11) jeweils im Funktionsabschnitt (16) sich in radialer Richtung von der Innennabenachse (A1) unter einem ersten Innenlaufrillen-Winkel entfernen,
**dass** die zweiten Innenlaufrillen (12) jeweils im Funktionsabschnitt (12) sich in radialer Richtung der Innennabenachse (A1) unter einem zweiten Innenlaufrillen-Winkel zuneigen,
**dass** die ersten Außenlaufrillen (21) und die zweiten Außenlaufrillen (22) in axialer Richtung im Wesentlichen parallel zur Außennabenachse (A2) ausgestaltet sind, dass die ersten Außenlaufrillen (21) und die zweiten Außenlaufrillen (22) jeweils mindestens einen Verschiebeabschnitt (25) und einen Funktionsabschnitt (26, 27) aufweisen,
**dass** die ersten Außenlaufrillen (21) und die zweiten Außenlaufrillen (22) jeweils im Verschiebeabschnitt (25) in radialer Richtung einen im Wesentlichen konstanten Abstand zur Außennabenachse (A2) aufweisen,
**dass** die ersten Außenlaufrillen (21) jeweils im Funktionsabschnitt (26) sich in radialer Richtung von der Außennabenachse (A2) unter einem ersten Außenlaufrillen-Winkel entfernen,
**dass** die zweiten Außenlaufrillen (22) jeweils im Funktionsabschnitt (27) sich in radialer Richtung der Außennabenachse (A2) unter einem zweiten Außenlaufrillen-Winkel zuneigen.

2. Verschiebegelenk nach Anspruch 1,
**dadurch gekennzeichnet,**
**dass** jeweils der Verschiebeabschnitt (15) und der Funktionsabschnitt (16, 17) der Innenlaufrillen (11, 12) unmittelbar aneinander angrenzend sind.

3. Verschiebegelenk nach Anspruch 1 oder 2,
**dadurch gekennzeichnet,**
**dass** jeweils der Verschiebeabschnitt (25) und der Funktionsabschnitt (26, 27) der Außenlaufrillen (21, 22) unmittelbar aneinander angrenzend sind.

4. Verschiebegelenk nach einem der Ansprüche 1 bis 3,
**dadurch gekennzeichnet,**
**dass** sich an die Funktionsabschnitte(16, 17) der Innenlaufrillen (11, 12) an der vom jeweiligen Verschiebeabschntt (15) abgewandten Seite jeweils ein paralleler Abschnitt anschließt, in welchem die Innenlaufrillen (11, 12) in radialer Richtung einen im Wesentlichen konstanten Abstand zur Innennabenachse (A1) aufweisen.

5. Verschiebegelenk nach einem der Ansprüche 1 bis 4,
**dadurch gekennzeichnet,**
**dass** sich an die Funktionsabschnitte (26, 27) der Außenlaufrillen (21, 22) an der vom jeweiligen Verschiebeabschnitt (25) abgewandten Seite jeweils ein paralleler Abschnitt anschließt, in welchem die Außenlaufrillen (21, 22) in radialer Richtung einen im Wesentlichen konstanten Abstand zur Außennabenachse (A2) aufweisen.

6. Verschiebegelenk nach einem der Ansprüche 1 bis 5,
**dadurch gekennzeichnet,**
**dass** mindestens eine Innenlaufrille (11, 12) und/oder mindestens eine Außenlaufrillen (21, 22) mindestens einen Anschlag (19) aufweist, welcher eine Bewegung einer Kugel (4) in dem der Innenlaufrille (11, 12) und/oder der Außenlaufrille (21, 22) zugeordneten Laufrillenpaar axial begrenzt.

7. Verschiebegelenk nach einem der Ansprüche 1 bis 6,
**dadurch gekennzeichnet,**
**dass** der erste Innenlaufrillen-Winkel und der zweite Innenlaufrillen-Winkel im Wesentlichen betragsgleich sind.

8. Verschiebegelenk nach einem der Ansprüche 1 bis 7,
**dadurch gekennzeichnet,**
**dass** der erste Außenlaufrillen-Winkel und der zweite Außenlaufrillen-Winkel im Wesentlichen betragsgleich sind.

9. Verschiebegelenk nach einem der Ansprüche 1 bis 8,
**dadurch gekennzeichnet,**
**dass** der erste Innenlaufrillen-Winkel und der erste Außenlaufrillen-Winkel im Wesentlichen den gleichen Betrag aufweisen.

10. Verschiebegelenk nach einem der Ansprüche 1 bis 9,
**dadurch gekennzeichnet,**
**dass** der zweite Innenlaufrillen-Winkel und der zweite Außenlaufrillen-Winkel im Wesentlichen den gleichen Betrag aufweisen.

11. Verschiebegelenk nach einem der Ansprüche 1 bis 10,
**dadurch gekennzeichnet,**
**dass** für die Laufrillenpaare jeweils die Länge des Funktionsabschnitts (16, 17) der ersten Innenlaufrille (11, 12) und die Länge des Funktionsabschnitts (26, 27) der zugeordneten ersten Außenlaufrille (21, 22) Wesentlichen gleich sind.

12. Verschiebegelenk nach einem der Ansprüche 1 bis 11,
**dadurch gekennzeichnet,**
**dass** für die Laufrillenpaare jeweils die Länge des Funktionsabschnitts (17) der zweiten Innenlaufrille (12) und die Länge des Funktionsabschnitts (27) der zugeordneten zweiten Außenlaufrillen (22) im Wesentlichen gleich sind.

13. Verschiebegelenk nach einem der Ansprüche 1 bis 12,
**dadurch gekennzeichnet,**
**dass** die Fenster des Käfigs (3), die Kugeln (4), die Innenlaufbahnen und die Außenlaufbahnen derartig ausgestaltet und aufeinander abgestimmt sind, dass der Käfig (3) die Kugeln (4) auch in dem Zustand führt, in welchem die Kugeln (4) sich in dem Bereich des größten radialen Abstands der Funktionsabschnitte (16, 17, 26, 27) der Innenlaufbahnen und der Außenlaufbahnen befinden.

14. Verschiebegelenk nach einem der Ansprüche 1 bis 13,
**dadurch gekennzeichnet,**
**dass** die Fenster des Käfigs (3), die Kugeln (4) die Innenlaufbahnen und die Außenlaufbahnen derartig ausgestaltet und aufeinander abgestimmt sind, dass der Käfig (3) die Kugeln (4) auch in dem Zustand führt, in welchem die Kugeln (4) sich in dem Bereich des kleinsten radialen Abstands der Funktionsabschnitte (16, 17, 26, 27) der Innenlaufbahnen und der Außenlaufbahnen befinden.

15. Verschiebegelenk nach einem der Ansprüche 1 bis 14,
**dadurch gekennzeichnet,**
**dass** zumindest die Außennabe (2) teilweise aus einem Metall und teilweise aus einem Kunststoff besteht.

## Claims

1. Sliding joint for motor vehicles
comprising an inner race (1) with an inner race axis (A1), first inner running grooves (11) and second inner running grooves (12);
an outer race (2) with an outer race axis (A2), first outer running grooves (21) and second outer running grooves (22);
one first inner running groove (11) and one first outer running groove (21) being disposed opposite each other and together forming a first running groove pair;
one second inner running groove (12) and one second outer running groove (22) being disposed opposite each other and together forming a second running groove pair; a substantially circularly shaped cage (3) having a number of windows corresponding to the number of running groove pairs,
said cage (3) arranged between the inner race (1) and the outer race (2), with balls (4) that are guided into the windows of the cage (3) and engage in the inner running grooves (11, 12) and the outer running grooves (21, 22),
**characterized by** the first inner running grooves (11) and the second inner running grooves (12) being constructed to run substantially parallel to the inner race axis (A1) in the axial dimension; the first inner running grooves (11) and the second inner running grooves (12) each having at least one displacement segment (15) and one functional segment (16, 17);
the first inner running grooves (11) and the second inner running grooves (12) each having a substantially constant separation distance from the inner race axis (A1) in the displacement segment (15), measured radially therefrom;
the first inner running grooves (11) each extending radially outward from the inner race axis (A1) at a first inner running groove angle in the functional segment (16);
the second inner running grooves (12) each inclining at a second inner running groove angle radially toward the inner race axis (A1) in the functional segment (15);
the first outer running grooves (21) and the second outer running grooves (22) being constructed substantially parallel to the outer race axis (A2) in the axial dimension;
the first outer running grooves (21) and the second outer running grooves (22) each having at least one displacement segment (25) and one functional segment (26, 27); the first outer running grooves (21) and the second outer running grooves (22) each having a substantially constant separation distance from the outer race axis (A2) in the displacement segment (25), measured radially therefrom;
the first outer running grooves (21) each extending radially outward from the outer race axis (A2) at a first outer running groove angle in the functional segment (26);
the second outer running grooves (22) each inclining at a second outer running groove angle radially toward the outer race axis (A2) in the functional segment (27).

2. A sliding joint according to claim 1, **characterized by** both the displacement segment (15) and the functional segment (16, 17) of the inner running grooves (11,12) directly abutting each other.

3. A sliding joint according to claims 1 or 2, **characterized by** both the displacement segment (25) and the functional segment (26, 27) of the outer running grooves (21,22) directly abutting each other.

4. A sliding joint according to one of the claims 1 to 3, **characterized by** one parallel segment joining with each of the functional segments (16, 17) of the inner running grooves (11, 12) on the side that faces away from the respective displacement segment (15), and in this parallel segment the inner running grooves (11, 12) having a substantially constant separation distance from the inner race axis (A1), measured radially from said inner race axis.

5. A sliding joint according to one of the claims 1 to 4, **characterized by** one parallel segment joining with each of the functional segments (26, 27) of the outer running grooves (21, 22) on the side that faces away from the respective displacement segment (25), and in this parallel segment the outer running grooves (21, 22) having a substantially constant separation distance from the outer race axis (A2), measured radially from said outer race axis.

6. A sliding joint according to one of the claims 1 to 5, **characterized by** at least one inner running groove (11, 12) and/or at least one outer running groove (21, 22) having at least one limit stop (19) that limits axial movement of a ball (4) in the running groove pair consisting of the inner running groove (11, 12) and/or the outer running groove (21, 22).

7. A sliding joint according to one of the claims 1 to 6, **characterized by** the first inner running groove angle and the second inner running groove angle having substantially the same value.

8. A sliding joint according to one of the claims 1 to 7, **characterized by** the first outer running groove angle and the second outer running groove angle having substantially the same value.

9. A sliding joint according to one of the claims 1 to 8, **characterized by** the first inner running groove angle and the first outer running groove angle having substantially the same value.

10. A sliding joint according to one of the claims 1 to 9, **characterized by** the second inner running groove angle and the second outer running groove angle having substantially the same value.

11. Sliding joint according to one of the claims 1 to 10, **characterized by** the length of the functional segment (16, 17) of the first inner running groove (11, 12) and the length of the functional segment (26, 27) of the associated first outer running groove (21, 22) being substantially equal for each of the running groove pairs.

12. Sliding joint according to one of the claims 1 to 11, **characterized by** the length of the functional segment (17) of the second inner running groove (12) and the length of the functional segment (27) of the associated second outer running groove (22) being substantially equal for each of the running groove pairs.

13. Sliding joint according to one of the claims 1 to 12, **characterized by** the windows of the cage (3), the balls (4), the inner raceways and the outer raceways being constructed in such a manner and corresponding to each other such that the cage (3) also guides the balls (4) even when the balls (4) are situated in the region where the functional segments (16, 17) of the inner raceways and the outer raceways have the largest radial separation distance from each other.

14. Sliding joint according to one of the claims 1 to 13, **characterized by** the windows of the cage (3), the balls (4), the inner raceways and the outer raceways being constructed in such a manner and corresponding to each other such that the cage (3) also guides the balls (4) even when the balls (4) are situated in the region where the functional segments (16, 17) of the inner raceways and the outer raceways have the smallest radial separation distance from each other.

15. Sliding joint according to one of the claims 1 to 14, **characterized by** at least the outer race (2) being comprised partially of a metal and partially of a plastic material.

## Revendications

1. Joint coulissant pour véhicules automobiles
avec un moyeu intérieur (1) qui présente un axe de moyeu intérieur (A1), de premières rainures de roulement intérieures (11) et de deuxièmes rainures de roulement intérieures (12),
avec un moyeu extérieur (2) qui présente un axe de moyeu extérieur (A2), de premières rainures de roulement extérieures (21) et de deuxièmes rainures de roulement extérieures (22),
une première rainure de roulement intérieure (11) et une première rainure de roulement extérieure (21) étant respectivement opposées l'une par rapport à l'autre et formant respectivement une première paire de rainures de roulement,
une deuxième rainure de roulement intérieure (12) et une deuxième rainure de roulement extérieure (22) étant respectivement opposées l'une par rapport à l'autre et formant respectivement une deuxième paire de rainures de roulement, avec une cage (3) qui est essentiellement configurée circulaire et présente des fenêtres conformément au nombre de paires de rainures de roulement,
la cage (3) étant placée entre le moyeu intérieur (1) et le moyeu extérieur (2), et avec des billes (4) qui cheminent dans les fenêtres de la cage (3) et qui engrènent dans les rainures de roulement intérieures (11, 12) et les rainures de roulement extérieures (21, 22).
**caractérisé en ce que** les premières rainures de roulement intérieures (11) et les deuxièmes rainures de roulement intérieures (12) sont conçues dans le sens axial essentiellement parallèlement à l'axe de moyeu intérieur (A1), que les premières rainures de roulement intérieures (11) et les deuxièmes rainures de roulement intérieures (12) présentent respectivement au moins une section coulissante (15) et une section fonctionnelle (16, 17),
que les premières rainures de roulement intérieures (11) et les deuxièmes rainures de roulement intérieures (12) présentent respectivement dans la section coulissante (15) et dans le sens radial un écartement essentiellement constant par rapport à l'axe de moyeu intérieur (A1),
que les premières rainures de roulement intérieures (11), respectivement dans la section fonctionnelle (16), s'éloignent dans le sens radial de l'axe de moyeu intérieur (A1) selon un premier angle de rainures de roulement intérieures,
que les deuxièmes rainures de roulement intérieures (12), respectivement dans la section fonctionnelle (15), s'inclinent dans le sens radial vers l'axe de moyeu intérieur (A1) selon un deuxième angle de rainures de roulement intérieures,
que les premières rainures de roulement extérieures (21) et les deuxièmes rainures de roulement extérieures (22) sont conçues dans le sens axial essentiellement parallèlement à l'axe de moyeu extérieur (A2),
que les premières rainures de roulement extérieures (21) et les deuxièmes rainures de roulement extérieures (22) présentent respectivement au moins une section coulissante (25) et une section fonctionnelle (26, 27),
que les premières rainures de roulement extérieures (21) et les deuxièmes rainures de roulement extérieures (22) présentent respectivement dans la section coulissante (25) et dans le sens radial un écartement essentiellement constant par rapport à l'axe de moyeu extérieur (A2),
que les premières rainures de roulement extérieures (21), respectivement dans la section fonctionnelle (26), s'éloignent dans le sens radial de l'axe de moyeu extérieur (A2) selon un premier angle de rainures de roulement extérieures,
que les deuxièmes rainures de roulement extérieures (22), respectivement dans la section fonctionnelle (27), s'inclinent dans le sens radial vers l'axe de moyeu extérieur (A2) selon un deuxième angle de rainures de roulement extérieures.

2. Joint coulissant selon revendication 1, **caractérisé en ce que**, respectivement, la section coulissante (15) et la section fonctionnelle (16, 17) des rainures de roulement intérieures (11, 12) sont directement attenantes l'une à l'autre.

3. Joint coulissant selon revendication 1 ou 2, **caractérisé en ce que**, respectivement, la section coulissante (25) et la section fonctionnelle (26, 27) des rainures de roulement extérieures (21, 22) sont directement attenantes l'une à l'autre.

4. Joint coulissant selon l'une des revendications 1 à 3, **caractérisé en ce que**, aux sections fonctionnelles (16, 17) des rainures de roulement intérieures (11, 12) se raccorde respectivement, du côté opposé à la section coulissante respective (15), une section parallèle dans laquelle les rainures de roulement intérieures (11, 12) présentent dans le sens radial un écartement essentiellement constant par rapport à l'axe de moyeu intérieur (A1).

5. Joint coulissant selon l'une des revendications 1 à 4, **caractérisé en ce que**, aux sections fonctionnelles (26, 27) des rainures de roulement extérieures (21, 22) se raccorde respectivement, du côté opposé à la section coulissante respective (25), une section parallèle dans laquelle les rainures de roulement extérieures (21, 22) présentent dans le sens radial un écartement essentiellement constant par rapport à l'axe de moyeu extérieur (A2).

6. Joint coulissant selon l'une des revendications 1 à 5, **caractérisé en ce que** au moins une rainure de roulement intérieure (11, 12) et/ou au moins une rainure de roulement extérieure (21, 22) présentent au moins une butée (19) qui limite axialement un mouvement d'une bille (4) dans la paire de rainures de roulement attribuée à la rainure de roulement intérieure (11, 12) et/ou à la rainure de roulement extérieure (21, 22).

7. Joint coulissant selon l'une des revendications 1 à 6, **caractérisé en ce que** le premier angle de rainures de roulement intérieures et le deuxième angle de rainures de roulement intérieures ont essentiellement la même valeur.

8. Joint coulissant selon l'une des revendications 1 à 7, **caractérisé en ce que** le premier angle de rainures de roulement extérieures et le deuxième angle de rainures de roulement extérieures ont essentiellement la même valeur.

9. Joint coulissant selon l'une des revendications 1 à 8, **caractérisé en ce que** le premier angle de rainures de roulement intérieures et le premier angle de rainures de roulement extérieures ont essentiellement la même valeur.

10. Joint coulissant selon l'une des revendications 1 à 9, **caractérisé en ce que** le deuxième angle de rainures de roulement intérieures et le deuxième angle de rainures de roulement extérieures ont essentiellement la même valeur.

11. Joint coulissant selon l'une des revendications 1 à 10, **caractérisé en ce que**, pour les paires de rainures de roulement, la longueur de la section fonctionnelle (16, 17) de la première rainure de roulement intérieure (11, 12) et la longueur de la section fonctionnelle (26, 27) de la première rainure de roulement extérieure attribuée (21, 22) sont respectivement essentiellement identiques.

12. Joint coulissant selon l'une des revendications 1 à 11, **caractérisé en ce que**, pour les paires de rainures de roulement, la longueur de la section fonctionnelle (17) de la deuxième rainure de roulement intérieure (12) et la longueur de la section fonctionnelle (27) des deuxièmes rainures de roulement extérieures attribuées (22) sont respectivement essentiellement identiques.

13. Joint coulissant selon l'une des revendications 1 à 12, **caractérisé en ce que** les fenêtres de la cage (3), les billes (4), les pistes de roulement intérieures et les pistes de roulement extérieures sont conçues et adaptées entre elles de sorte que la cage (3) guide également les billes (4) dans l'état dans lequel les billes (4) se trouvent dans la zone du plus grand écartement radial des sections fonctionnelles (16, 17) des pistes de roulement intérieures et des pistes de roulement extérieures.

14. Joint coulissant selon l'une des revendications 1 à 13, **caractérisé en ce que** les fenêtres de la cage (3), les billes (4), les pistes de roulement intérieures et les pistes de roulement extérieures sont conçues et adaptées entre elles de sorte que la cage (3) guide également les billes (4) dans l'état dans lequel les billes (4) se trouvent dans la zone du plus petit écartement radial des sections fonctionnelles (16, 17) des pistes de roulement intérieures et des pistes de roulement extérieures.

15. Joint coulissant selon l'une des revendications 1 à 14, **caractérisé en ce que** au moins le moyeu extérieur (2) est composé en partie d'un métal et en partie d'une matière plastique.
